(19) Europäisches Patentamt
European Patent Office
Office européen des brevets

(11) **EP 3 971 817 A1**

(12) **EUROPEAN PATENT APPLICATION**

(43) Date of publication:
**23.03.2022 Bulletin 2022/12**

(21) Application number: **20380020.6**

(22) Date of filing: **20.09.2020**

(51) International Patent Classification (IPC):
**G06Q 50/30** (2012.01)  **G06Q 10/08** (2012.01)
**G06Q 10/06** (2012.01)  **B61L 15/00** (2006.01)
**B61L 27/00** (2022.01)

(52) Cooperative Patent Classification (CPC):
**G06Q 50/30; B61L 15/0081; B61L 27/40;
G06Q 10/0631; G06Q 10/08**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Siemens Rail Automation S.A.U.
28760 Tres Cantos (Madrid) (ES)**

(72) Inventors:
• **Hernandez Donadeu, Alfonso Carlos
E-28001 Madrid (ES)**

• **Garcia Esteban, Hector
E-19005 Guadalajara (ES)**
• **Garcia Serrano Gonzalez, Juan Manuel
E-45760 La Guardia (Toledo) (ES)**
• **Velasco Jimeno, Victor
ES-28850 Torrejon de Ardoz (Madrid) (ES)**

(74) Representative: **Deffner, Rolf
Siemens Mobility GmbH
Postfach 22 16 34
80506 München (DE)**

(54) **METHOD AND SYSTEM FOR DETERMINING AN OCCUPATION STATE OF A COACH OF A GUIDED VEHICLE**

(57) The present invention concerns a method and a system for improving a distribution of passengers (4) within coaches (21) of a guided vehicle (2), the system comprising:
- a weighing system (11) configured for being installed on-board the guided vehicle (2), said weighing system (11) being configured for determining a current weight data for the guided vehicle (2) and for transmitting said current weight data to a control unit (12);

- said control unit (12) configured for being installed remotely with respect to the guided vehicle (2), and for determining from the current weight data an occupancy value for each passenger coach (21) of the guided vehicle (2);
- an information distribution system (13) configured for providing an information related to said occupancy value at a station (3) wherein the guided vehicle (2) is going to stop.

1

FIG 1

EP 3 971 817 A1

**Description**

The present invention concerns a system and a method for automatically determining an occupation state of a guided vehicle coach.

The present invention is essentially related to the field of guided vehicles, wherein the expression "guided vehicle" refers to public transport means such as subways, trains or train subunits, which might be guided by one or several rails along a track, but also buses, etc., which might be guided by a line or a marking on a road. More specifically, the present invention concerns vehicles which are configured for carrying passengers and for which the distribution of passengers within the vehicle, e.g. in different cars or coaches or compartment of the vehicle, might be relevant. Such vehicles might comprise several coaches, and/or several entrance/exit doors providing each a different way to access/exit the vehicle, e.g. its compartments or coaches (cars). In particular, the knowledge of a current distribution of passengers within the vehicle, e.g. in coaches of the vehicle, is helpful for organizing a distribution of passengers at a platform so that each flow of passengers entering the vehicle through its different doors results in a uniform distribution of the new amount of passengers within the vehicle. Such a uniform distribution within the vehicle improves not only the comfort of passengers (e.g. air conditioning equipment, number of vacant places, social distancing, etc.), but also the safety of the guided vehicle itself by distributing uniformly the weights within the vehicle, keeping therefore a braking balance for the vehicle.

Within the field of public transport passenger distribution, systems for providing passenger guidance at a station are known in the art. Such systems are for instance able to improve passenger distribution at a platform as well as passenger flow in the different parts of a station. Unfortunately, such systems are not aware of a current distribution of passengers within the coaches of a vehicle. Indeed, they only know, for example from the ticketing, the overall number of passengers, or at which place there might be a congestion at a platform, but not the repartition of the passengers within each coach of a vehicle, like a train.

Therefore, the problem of passenger distribution inside coaches of a vehicles is not efficiently solved by passenger distribution systems known in the art. Usually, passengers entering the vehicle have no clue about passenger distribution within the vehicle and have therefore to explore the vehicle until finding a convenient place. For instance, it happens that for a same vehicle, some of its coaches are completely overloaded with passengers, passengers standing between seat rows, while other coaches comprise a low number of passengers and still available seats.

An objective of the present invention is to propose a method and system capable of improving a distribution of passengers within coaches of a guided vehicle, notably by uniformizing the repartition of passengers within coaches of a guided vehicle, ensuring therefore a balanced braking with respect to the coaches.

For achieving said objective, the present invention proposes a system and method for uniformizing a repartition of passengers within coaches of a guided vehicle as disclosed by the objects of the independent claims. Other advantages of the invention are presented in the dependent claims.

The present invention concerns notably a system for improving a distribution of passengers within coaches of a guided vehicle, said system being notably configured for indicating, at a platform, and preferentially in real time, a current distribution of passengers within the coaches of an approaching guided vehicle, i.e. a guided vehicle that is going to stop at said platform, said system comprising:

- a weighing system configured for being installed on-board the approaching guided vehicle, said weighing system being configured for determining and outputting a current weight data for the approaching guided vehicle and for transmitting said current weight data to a control unit. The current weight data comprises notably:

    o optionally, a guided vehicle identification data for identifying the approaching guided vehicle for which said current weight data has been determined;
    o for each passenger coach of the guided vehicle, a measured weight that has been measured for the considered passenger coach;
    o optionally, for each measured weight and associated to the latter, a coach identification data configured for enabling an identification of the approaching guided vehicle passenger coach for which the current weight has been measured.

In particular, the weighing system comprises at least one weight sensor, i.e. a weight measuring device, per passenger coach, for instance installed in each passenger coach. As explained above, the current weight data comprises for each passenger coach a measured weight. The latter is measured, for each passenger coach, by one or several of said weight sensors which equip the concerned passenger coach. In other words, for each passenger coach, said weight sensor is configured for measuring, notably in real time, the weight of the passenger coach it equips. The weighing system is configured for receiving from the weight sensor the weight it has measured for the passenger coach it equips and is configured for centralizing the measured weights of the passenger coaches of the approaching guided vehicle and for transmitting said current weight data to a control unit. Preferentially, the weight sensor is configured for measuring a weight difference that is the difference between a passenger coach nominal weight wherein the passenger coach is free of passengers and its weight at the time of its measurement by the weight sensor. In such a case, the measured weight outputted by the weight sensor is a weight difference. Alternatively, the measured weight is the current weight of the passenger coach, i.e. its weight at the time of the measurement by the weight sensor. The weighing system is preferentially a centralized system installed within the approaching guided vehicle and configured for collecting for each passenger coach said measured weight measured by each of its weight sensors. Notably, each weight sensor installed on-board a passenger coach of the guided vehicle is configured for transmitting, according to a wireless or wired technique, to the weighing system the measured weight for the passenger coach it equips. Preferentially, the weighing system is configured for automatically associating each measured weight to said coach identification data configured for identifying the passenger coach for which said measured weight has been measured. Finally, the weighing system is configured for transmitting to the control unit each current weight data which is determined or created for the guided vehicle it equips. In particular, the weighing system is configured for determining or creating said current weight data and/or for sending the latter to the control unit at predefined times. For instance, the weighing system is configured for determining or creating said current weight data at each departure of the guided vehicle from a station and/or for transmitting said current weight data a predefined time before reaching a next station at which the guided vehicle has to stop. For this purpose, the weighing system is configured for determining an expected arrival time at each station the guided vehicle is expected to stop to and/or a departure of the guide vehicle from the station wherein it stopped, at the reception for instance of a departure signal indicating that the guided vehicle left the station. Alternatively, each weight sensor of the weighing system is configured for continuously measuring the weight of the passenger coach it equips, and the weighing system is configured for reporting to the control unit and at reception of a signal sent by said control unit or by a control system of the approaching guided vehicle the current weight measured by each weight sensor. Said signal sent by the control unit or by the control system acts thus as a trigger which makes the weighing system sending the current weight data to the control unit. In particular, the weighing system may communicate with a guided vehicle control system (on-board or remote) in order to acquire or determine or receive said expected arrival time and/or said departure signal and/or said signal triggering the reporting of the current weight data. Preferentially, the weighing system further comprises a clock used for triggering the determination and/or transmission of the current weight data to the control unit;

- said control unit, which is preferentially a ground system located for instance in a remote control center, is configured for communicating with the weighing system and for collecting or receiving from the latter said current weight data. The control unit is further configured for automatically outputting, for each of said passenger coaches, an occupancy value calculated from the measured weights comprised within the current weight data sent by the weighing system. In particular, if the measured weight is said current weight of the passenger coach at the time of the measurement by the weight sensor, then the control unit might be configured for automatically calculating said weight difference for each passenger coach of the approaching guided vehicle, said weight difference being the difference between the measured current weight and a nominal weight for the concerned passenger coach. The control unit is then further configured for determining for each passenger coach said occupancy value from said weight difference. The occupancy value is thus a function of the weight difference, which might be directly obtained from the weight sensor or calculated by the control unit from the current weight data. For instance, the control unit may output three occupancy values, for example a first occupancy value for a passenger coach whose occupancy is strictly greater than 90%, a second occupancy value for a passenger coach whose occupancy is comprised between 60% and 90%, and a third occupancy value for a passenger coach whose occupancy is strictly smaller than 60%. The occupancy value, expressed in percent, might be determined by the control unit by dividing an estimated number of occupied seats or places by the number of seats or places characterizing the passenger coach, wherein the estimated number of occupied seats or places is determined from the weight difference divided by an average passenger weight.

For instance, the occupancy value might also be determined according to the following equation:

$$\mathrm{Occupancy\ value\ =\ [((P-Z)/X)/Y] \cdot 100(\%)\quad (Eq.\ 1)}$$

wherein X[kg] is an average weight per person, Y is the maximum number of passengers defined for the passenger coach, Z[kg] is the passenger coach empty weight (of course, depending on the location of the weight sensor(s), it might be defined differently, e.g. as the car empty weight), and P [kg] is the weight of the passenger coach measured by the weighing system. For instance, considering an average weight X = 75 kg for a passenger and a passenger coach characterized by an empty weight Z = 14000kg, a maximum number of passengers Y = 120, and a measured weight P = 16500 kg, then the occupancy value is equal to [((16500-14000)/75)/120]·100 = 27.7%.

The control unit may comprise a memory configured for storing for each passenger coach of the guided vehicle said nominal weight and for selecting the appropriate nominal weight from an identification of the coaches of the approaching guided vehicle from the coach identification data comprised within the current weight data. According to the present invention, the control unit receives from the weighing system a message, i.e. said current weight data, comprising the guided vehicle identification data, e.g. a code, for each passenger coach, the measured weight, wherein the latter is preferentially associated to said coach identification data enabling to identify the coach for which said measured weight has been determined. In other words, the message sent by a weighing system comprises preferentially at least three data, i.e. the guided vehicle identification data, then for each passenger coach its measured weight, and for each measured weight, the associated coach identification data, and optionally a time stamp. The control unit is further configured for automatically determining and selecting, notably in function of the time, an information distribution system to which each occupancy value determined for a guided vehicle has to be sent. For this purpose and for instance, the control unit might be configured for determining each station and optionally platform at which a guided vehicle is going to stop. In particular, it may communicate with a central guided vehicle control system for acquiring said information or it may determine said information from a guided vehicle schedule stored in a database. From said determination, it is able to identify the information distribution system to which said occupancy value(s) has to be communicated in order to provide future passengers with passenger coach occupancy values before arrival of the guided vehicle at the concerned station platform. Optionally, the control unit further comprises a clock used for triggering the successive sending of said occupancy values to each next station at which a guided vehicle is going to stop. Said sending may take place a predefined time before arrival of the guided vehicle at the concerned station;

- an information distribution system, connected to or communicating with the control unit, and preferentially controlled by the latter, and configured for providing for each passenger coach, e.g. at the platform, an information associated or related to the occupancy value calculated or determined by the control unit for each passenger coach of the approaching guided vehicle. The information distribution system may comprise one or several light emitting devices, like a display. In particular, said information might be the occupancy value itself, which might be displayed by the information distribution system on or by said one or several light emitting devices at the platform. Preferentially, the information distribution system comprises for each passenger coach area at the platform a light emitting device, e.g. a display, wherein each of said light emitting device is configured for displaying or emitting a visible light according to a color which is a function of the occupancy value of the passenger coach which is expected to stop at said passenger coach area (e.g. red for the first occupancy value, orange for the second occupancy value and green for the third occupancy value). The passenger coach area is a platform area wherein a passenger coach is expected to stop, such area being defined for each passenger coach at the platform. In particular, the emitted light might be emitted in direction of the platform ground or on an edge of the platform, so that the ground or said edge of each platform passenger coach area be color encoded by the emitted light wherein the color of the ground or edge projected light reflects the current occupancy value of the passenger coach of the approaching guided vehicle that is expected to stop at said passenger coach area.

According to the present invention, and preferentially, several or all guided vehicles configured for moving on a railway network comprise each said weighting system. The control unit is then configured for receiving all current weight data from each weighing system on-board of said several or all guided vehicles. Then, for each guided vehicle, the control unit determines said occupancy values for each coach of each guided vehicle and timely dispatches, i.e. sends, said occupancy values to the information distribution system of the next stopping station of each guided vehicle. By this way, said occupancy values are dispatched to the required stations for each approaching guided vehicle.

The present invention concerns also a method for improving a distribution of passengers within coaches of a guided vehicle, the method comprising:

- determining by a weighing system installed on-board the guided vehicle a current weight data for said guided vehicle, wherein said current weight data comprises, for each passenger coach of the guided vehicle, a measured weight;
- transmitting the current weight data to a remote control unit;
- determining from each measured weight and by the control unit an occupancy value for each passenger coach of the guided vehicle;
- sending to an information distribution system the previously determined occupancy values, and providing or displaying at a station, preferentially at a platform of said station, wherein the guided vehicle is going to stop an information associated or related to said previously determined occupancy values.

Further aspects of the present invention will be better understood through the following drawings, wherein like numerals are used for like and corresponding parts:

Figure 1    schematic representation of a system for improving a distribution of passenger within coaches of a guided vehicle according to the invention.

Figure 2    flowchart of a preferred method according to the invention.

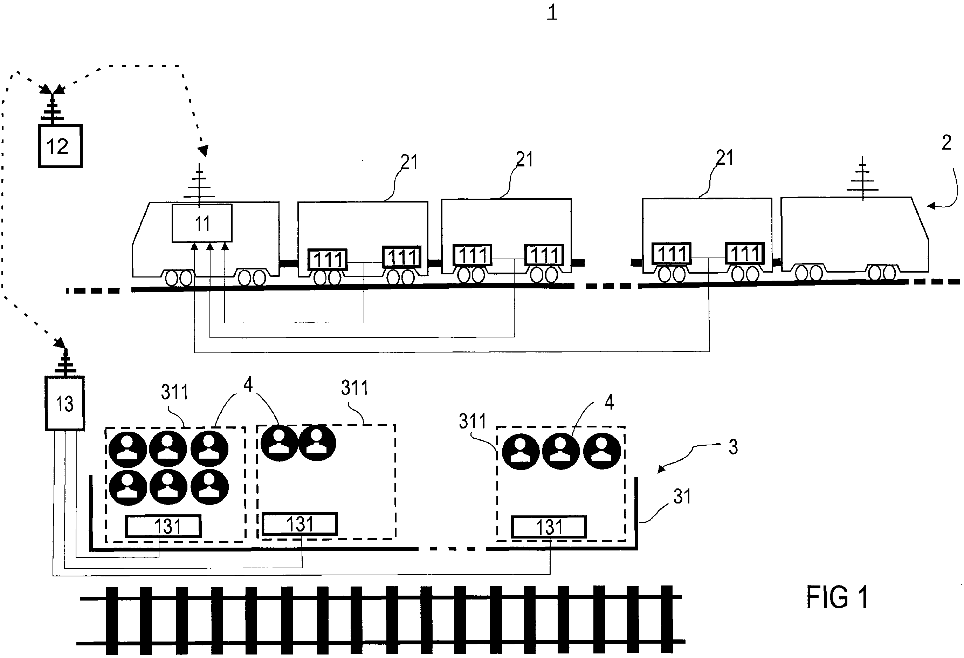

Figure 1 illustrates a preferred embodiment of a system 1 for improving a distribution of passengers 4 within the passenger coaches 21 of a guided vehicle 2. Said guided vehicle 2 is for instance a train configured for moving on a railway network. Of course, the kind of guided vehicle 2 is not limited to train, but it can also be any vehicle which comprises passenger coaches for which the distribution of the passengers within the coaches might be relevant and, preferentially, for which the passenger coaches configuration makes it possible to measure the weight of a coach independently from the weight of another coach, or if not possible, for which the weight dependence of one coach with respect to another coach can be modelled by a mathematical function.

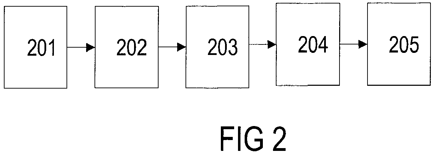

The system 1 according to the invention comprises a weighing system 11, a control unit 12, and an information distribution system 13. Each of them may comprise a processor and optionally a memory or database for enabling their correct working, as well as communication and/or connection means. The weighing system 11 is configured for being installed on-board the guided vehicle 2. The control unit 12 is remotely located with respect to the guided vehicle 2. For instance, the control unit 12 is located within a centralized control center whose task is to control the safe displacement of all guided vehicles within a track network, e.g. a railway network. The information distribution system 13 is typically located at a station 3 and configured for providing passenger coach occupancy information at said station 3, e.g. at the platform 31 wherein guided vehicle 2 comprising passenger coaches 21 is expected to stop for letting passengers 4 getting in/out of the guided vehicle coaches 21. A preferred embodiment of the method for improving the distribution of passengers 4 within said coaches 21 of the guided vehicle 2 will be now described based on Figure 2. The method comprises preferentially the following steps with respect to the system 1 illustrated in Fig. 1:

At step 201, the weighing system 11 automatically determines a current weight data for the guided vehicle 2. The current weight data comprises, for each passenger coach 21 of the guided vehicle 2, a weight that has been measured for the concerned passenger coach 21. Said weight might be measured by the weighing system 11 in real time, and/or at predefined times triggered for instance by a departure of the guided vehicle 2 from the station 3, and/or for a predefined period. For instance, the weighing system 11 is configured for measuring said weight for each coach during the period of time the guided vehicle is at standstill at the station 3 until a predefined period of time after its departure, and/or a predefined period of time before arriving at a station wherein the guided vehicle 2 is going to stop. Said weight measured for each coach by the weighing system 11 can be

- a weight difference that is the difference of weight between a nominal weight of the passenger coach 21 when it is free of any passengers and a current weight, i.e. its weight at the time of measurement by the weighing system 11, when the guided vehicle 2 is operating; or
- said current weight.

In any case, the final goal is to determine by the control unit 12 and from said measured weight, an occupancy value for each passenger coach 21 of the guided vehicle 2. In order to measure said weight for each passenger coach 21, the weighing system 11 preferentially comprises at least one weight sensor 111 per passenger coach 21, i.e. it comprises preferentially a number of weight sensors 111 that is at least equal to the number of passenger coaches 21 of the guided vehicle 2. A passenger coach typically comprises a car supported by one or several bogies supported by said one or several bogies. The bogie comprises one or several wheelsets carried by a bogie chassis on which the car is installed. The bogie comprises usually a suspension system, e.g. a spring, mounted between its chassis and the car and configured for absorbing shocks. As shown in Fig. 1, a weight sensor 111 might be installed between the car and each bogie of each passenger coach 21. According to the present invention, the weight sensor 111 is preferentially installed between the car and the bogie for determining the bogie spring depression caused by the weight of the car. The guided vehicle 2 preferentially comprises passenger coaches 21 which are weight independent with respect to each other at least when the guided vehicle 2 is at standstill. In other words, the measurement of the weight of one passenger coach 21 is independent from the measurement of the weight of another passenger coach 21.

From the weight value measured by each weight sensor 111 of a same passenger coach, the weighing system 11 determines for said passenger coach said weight, so that a weight is determined for each passenger coach 21. The weighing system 11 determines or creates then said current weight data which comprises the measured weight for each passenger coach 21, a data enabling an identification of the guided vehicle, called "guided vehicle identification data", a data enabling to identify the coach for which said measured weight has been measured, called "coach identification data".

At step 202, the weighing system 11 then transmits said current weight data to the control unit 12. According to the present invention, the system 1 may comprise several weighing systems 11, each configured for being installed on-board a different guided vehicle, and several information distribution systems 13, each configured for being installed at a different station 3, all communicating with the control unit 12 acting as a centralized system for determining occupancy states of passenger coaches 21 of the guided vehicles 2 moving on the track network.

At step 203, the control unit 12 determines, for each passenger coach of each guided vehicle 2 for which it received said current weight data and from the weight that has been measured for the considered passenger coach and which is comprised within the received current weight data, an occupancy value. Said occupancy value is thus determined by the control unit 12 for each passenger coach 21 of each guided vehicle 2 that has sent the current weight data. The occupancy value is for instance an occupancy rate, calculated in percent, for the considered passenger coach 21. Indeed, from the weight comprised in the current weight data, the control unit 12 is configured for determining an estimated number of passengers located within the passenger coach and therefore an estimated number of free seats or of free places from the total number of available seats or maximum number of places in the passenger coach 21. In particular, the control unit 12 uses the coach identification data for automatically determining, for instance from a database, passenger coach characteristics, such as number of seats or maximum number of places within the passenger coach and/or nominal weight of the passenger coach.

At step 204, the control unit 12 sends the previously determined/created current weight data to the information distribution system 13 of the station 3 wherein the guided vehicle 2 is going to have its next stop. For this purpose, the control unit 12 comprises a database listing for instance not only characteristics of each guided vehicle 2 like number of coaches, guided vehicle configuration with respect to the coaches, nominal weight of the coaches, number of seats of each coach, or maximum number of places defined for each coach, etc., but also the stations and optionally platforms at which the guided vehicle 2 is going to stop and the planned schedule regarding the arrival time and departure time for each station wherein the guided vehicle stops. From the information comprised within said database, the control unit 12 is able to determine to which information distribution system 13 the previously determined occupancy values have to be sent.

At step 205, the information distribution system 13 of the next station wherein the guided vehicle 2 is going to stop receives the previously determined occupancy values and automatically provides an information related to said occupancy values within the station 3, for instance at the platform 31 wherein the guided vehicle 2 is expected to stop. In particular, the information distribution system 13 may comprise, installed at each platform wherein a guided vehicle is going to stop, a light emitting device, e.g. a display or screen 131, that will display said information regarding the occupancy values. For instance, it can directly display said occupancy value, or it can display or emit a color that is a function of this occupancy value, e.g. green representing a passenger coach with less than 50% of occupancy, red a passenger coach with more than 90% occupancy and orange for occupancy rates between 50% and 90%. Preferentially, the information distribution system 13 comprises, for each platform area 311 wherein a passenger coach 21 is going to be located when the guided vehicle 2 is at standstill at the platform 31, said emitting device 131 configured for providing a visual representation (e.g. by means of said colors) of the occupancy value or rate of the passenger coach that is at standstill at said platform area 311.

Preferentially, the weighing system 11 is configured for measuring in real time the different weights of each of the passenger coaches 21 of the guided vehicle 2 when the latter is at standstill at the platform 31. By this way, it can provide in real time the current weight data to the control unit 12 which calculates in real time the occupancy value of each passenger coach, making it possible to provide in real time at the platform an information about the occupancy of each coach by means of the light emitting devices 131 of the information distribution system 13. By this way, newly arriving passengers who need to board the guided vehicle 2 at standstill at the platform 3 have a direct visualization of occupancy rates of the passenger coaches 21 through the light emitting devices 113 and therefore directly know the occupancy statuses of each passenger coaches and which platform area 311 they have to reach in order to find a passenger coach 21 having available seats or places. The system 1 enables thus to avoid passengers moving within the passenger coaches for finding a free seat or place. Indeed, a newly arriving passenger directly knows, from the occupancy value related to the displayed information, in which passenger coach there will still be free seats or places, and he can directly board in this specific passenger coach.

To summarize, the present invention provides a system 1 for improving a distribution of passengers 4 within the coaches 21 of an approaching guided vehicle 2. By providing to the passengers 4 information about each passenger coach occupancy of an approaching guided vehicle, the process of getting in and out of the guided vehicle might be faster which decreases the stopping time of the guided vehicle 2 at the platform 3. Additionally, it makes said process of getting in and out of the guided vehicle safer by managing the crowding at each passenger coach. Finally, by uniformizing the distribution of people within the coaches of the guided vehicle 2, it not only makes the journey more comfortable for passengers, but also ensures a balance braking and a decrease of the wear of rolling stock equipment due to all coaches having a similar weight.

**Claims**

1. System (1) for improving a distribution of passengers within passenger coaches (21) of a guided vehicle (2), said system (1) comprising:

   - a weighing system (11) configured for being installed on-board the guided vehicle (2), said weighing system (11) being configured for determining a current weight data for the guided vehicle (2) and for transmitting said current weight data to a control unit (12);
   - said control unit (12) configured for being installed remotely with respect to the guided vehicle (2), and for determining from the current weight data an occupancy value for each passenger coach (21) of the guided vehicle (2);
   - an information distribution system (13) configured for providing an information related to said occupancy value at a station (3) wherein the guided vehicle (2) is going to stop.

2. System (1) according to claim 1, wherein the control unit (12) is configured for automatically identifying and selecting an information distribution system (13) to which each occupancy value determined for the guided vehicle has to be sent.

3. System (1) according to claim 1 or 2, wherein the weighing system (11) is configured for determining said current weight data and/or for transmitting the latter to the control unit (12) at predefined times.

4. System (1) according to one of the claims 1 to 3, comprising several weighing systems (11), each configured for being installed on-board a different guided vehicle (2), and several information distribution systems (13), each configured for being installed at a different station (3).

5. System according to one of the claims 1 to 4, wherein the information distribution system (13) comprises for each platform area (31) wherein a passenger coach (21) is expected to be located when the guided vehicle (2) is at standstill at the platform (3) a light emitting device (131) controlled by the information distribution system (13) for emitting a light whose color is a function of the occupancy value calculated for the passenger coach (21) that is expected to be located at the platform area (31) wherein said light emitting device (131) is located.

6. Method for improving a distribution of passengers within passenger coaches (21) of a guided vehicle (2), the method comprising the steps:

   - determining (201) by a weighing system (11) installed on-board the guided vehicle (2) a current weight data for said guided vehicle (2), wherein said current weight data comprises, for each passenger coach (21) of the guided vehicle (2), a measured weight;
   - transmitting (202) the current weight data to a remote control unit (12);
   - determining (203), from each measured weight and by the control unit (12), an occupancy value for each passenger coach (21) of the guided vehicle (2);
   - sending (204) to an information distribution system (13) the previously determined occupancy values, and providing (205), at a station (3) wherein the guided vehicle (2) is going to stop, an information related to said previously determined occupancy values.

7. Method according to claim 6, comprising automatically identifying and selecting by means of the control unit (12) an information distribution system (13) to which each occupancy value determined for the guided vehicle (2) has to be sent.

8. Method according to claim 6 or 7, comprising determining said current weight data and/or transmitting the latter to the control unit (12) at predefined times.

9. Method according to one of the claims 6 to 8, comprising emitting, by means of a light emitting device of the information distribution system and at each platform area (31) wherein a passenger coach (21) is expected to be located when the guided vehicle (2) is at standstill at the platform (3), a light whose color is controlled by the information distribution system (13) so that said color is a function of the occupancy value calculated for the passenger coach (21) that is expected to be located at the platform area (31) wherein said light emitting device (131) is located.

FIG 1

201 → 202 → 203 → 204 → 205

# FIG 2

Europäisches
Patentamt

European
Patent Office

Office européen
des brevets

# EUROPEAN SEARCH REPORT

**Application Number**

EP 20 38 0020

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2018/096599 A1 (NAGAO YUTAKA [US]) 5 April 2018 (2018-04-05) * the whole document * | 1-9 | INV. G06Q50/30 G06Q10/08 G06Q10/06 B61L15/00 B61L27/00 |
| Y | EP 2 485 458 A1 (BOMBARDIER TRANSP GMBH [DE]) 8 August 2012 (2012-08-08) * paragraphs [0014], [0028] * | 1-9 | |
| Y | US 5 485 347 A (MIURA OKIMI [JP]) 16 January 1996 (1996-01-16) * column 1 - column 2; figure 1 * | 1-9 | |
| X | EP 0 917 697 A1 (SCHMIER KENNETH J [US]; FREDA PAUL [US]) 26 May 1999 (1999-05-26) * paragraphs [0019], [0054], [0056]; figures 1,2,6 * | 1-9 | |

**TECHNICAL FIELDS
SEARCHED     (IPC)**

G06Q
B61L

The present search report has been drawn up for all claims

| Place of search | Date of completion of the search | Examiner |
|---|---|---|
| Munich | 9 March 2021 | Härdeman, David |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons
........................................................................
& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 20 38 0020

This annex lists the patent family members relating to the patent documents cited in  the above-mentioned European search report.
The members are as contained in the European Patent Office EDP file on
The European Patent Office is in no way liable for these particulars which are merely given for the purpose of information.

09-03-2021

| Patent document cited in search report | | Publication date | Patent family member(s) | | Publication date |
|---|---|---|---|---|---|
| US 2018096599 | A1 | 05-04-2018 | CN | 109831910 A | 31-05-2019 |
| | | | EP | 3519271 A1 | 07-08-2019 |
| | | | JP | 2019534820 A | 05-12-2019 |
| | | | US | 2018096599 A1 | 05-04-2018 |
| | | | WO | 2018064570 A1 | 05-04-2018 |
| EP 2485458 | A1 | 08-08-2012 | NONE | | |
| US 5485347 | A | 16-01-1996 | JP | 3164942 B2 | 14-05-2001 |
| | | | JP | H0710004 A | 13-01-1995 |
| | | | US | 5485347 A | 16-01-1996 |
| EP 0917697 | A1 | 26-05-1999 | AT | 231636 T | 15-02-2003 |
| | | | AU | 735935 B2 | 19-07-2001 |
| | | | CA | 2263153 A1 | 26-02-1998 |
| | | | EP | 0917697 A1 | 26-05-1999 |
| | | | IL | 128479 A | 10-03-2002 |
| | | | JP | 2001503541 A | 13-03-2001 |
| | | | KR | 20000068163 A | 25-11-2000 |
| | | | NZ | 334228 A | 23-02-2001 |
| | | | NZ | 506938 A | 28-09-2001 |
| | | | US | 6374176 B1 | 16-04-2002 |
| | | | WO | 9808206 A2 | 26-02-1998 |

EPO FORM P0459

For more details about this annex : see Official Journal of the European Patent Office, No. 12/82